Europäisches Patentamt

European Patent Office

Office européen des brevets

(11) Veröffentlichungsnummer: **0 468 248 A2**

# EUROPÄISCHE PATENTANMELDUNG

(21) Anmeldenummer: **91111163.1**

(22) Anmeldetag: **04.07.91**

(51) Int. Cl.⁵: **H04L 9/12**

(30) Priorität: **25.07.90 DE 4023534**

(43) Veröffentlichungstag der Anmeldung:
**29.01.92 Patentblatt 92/05**

(84) Benannte Vertragsstaaten:
**CH DE GB IT LI NL**

(71) Anmelder: **SIEMENS AKTIENGESELLSCHAFT**
**Wittelsbacherplatz 2**
**W-8000 München 2(DE)**

(72) Erfinder: **Grotjahn, Dietrich, Dipl.-Phys.**
**Kastanienweg 4**
**W-6430 Bad Hersfeld(DE)**
Erfinder: **Wapp, Günter, Dipl.-Ing.**
**Am Rhinheller 14**
**W-6419 Haunetal(DE)**
Erfinder: **Grenzebach, Kurt, Ing.(grad)**
**Zur Biberkampfbahn 13**
**W-6440 Bebra(DE)**
Erfinder: **Hofmann, Valentin, Ing.(grad)**
**Finkenweg 1**
**W-8752 Krombach(DE)**

(54) **Verfahren und Anordnung zur Schlüsseleinphasung in gesicherten Datennetzen mit Halbduplexbetrieb.**

(57) In gesicherten Datennetzen mit Halbduplexbetrieb (z.B. Fernschreibnetzen) wird zur Vermeidung von Schlüsselphasenverlust die Halbduplexstrecke zum Einphasen wie zwei Simplexstrecken behandelt. Bei der Eröffnung des Datenverkehrs phast der Sendegenerator (KGS) des Schlüsselgerätes (SG1) der sendenden Station den Empfangsgenerator (KG-E) des Schlüsselgerätes (SG2) der empfangenden Station mit einem Spruchschlüssel ein. Beide Generatoren phasen dann ihren Partnergenerator desselben Schlüsselgerätes ein. Hierzu bilden sie sich selbst aus dem Spruchschlüssel unter Verwendung eines Einphasalgorithmus einen Einphasspruchschlüssel.

FIG 1

In gesicherten Datenübertragungsnetzen, wie z.B. in gesicherten Fernschreibnetzen, ist jeder Datenstation des Netzes ein Schlüsselgerät zugeordnet. Das Schlüsselgerät enthält in einem Sendekanal einen Sende-Kryptogenerator und in einem Empfangskanal einen Empfangs-Kryptogenerator zum Verschlüsseln bzw. Entschlüsseln der gesendeten bzw. empfangenen Zeichen. Während der Übertragung ist der Empfangs-Kryptogenerator der empfangenden Datenstation mit dem SendeKryptogenerator der sendenden Datenstation gekoppelt. Beim Betrieb eines derartigen Netzes in der Verkehrsart "Halbduplex" im Dialog über einen Übertragungskanal wird ständig zwischen Empfangszustand und Sendezustand der Datenstationen und damit der Schlüsselgeräte geschaltet. Dabei werden die entsprechenden Sende- und Empfangskryptogeneratoren miteinander gekoppelt. Ein Problem bildet dabei die Synchronisierung der Kryptogeneratoren. Eine Störung des Synchronlaufes der Kryptogeneratoren durch Schlüsselphasenverlust soll möglichst vermieden. Nach einem Schlüsselphasenverlust ist eine zeitaufwendige neue Schlüsseleinphasung notwendig. Während dieser Phase ist der Datenverkehr unterbrochen.

Zur Vermeidung eines derartigen Schlüsselphasenverlustes sind bisher eine Vielzahl von Maßnahmen bekannt. Dazu gehören:

Die Vereinbarung einer strengen Schreibdiziplin zur Verhinderung von Gegensprechen.

Die Verabredung einer Halbduplexprozedur. Das bedeutet, der Operator beendet seine Sendung mit einer Sequenz, z.B. "Over". Erst nach Empfang dieser Sequenz darf der Partner senden.

Eine Steuerung überwacht in der sendenden Station, daß eingegebene Klarzeichen nur verschlüsselt werden, wenn die Sende- und Empfangspuffer der Schlüsselgeräte leer sind. Die verschlüsselten Zeichen müssen dann ohne Zwischenpufferung sofort gesendet werden. Dabei ist es notwendig, der empfangenden Station für den Empfang eine höhere Priorität als für das Senden zuzuordnen. Das bedeutet, nach Empfang eines verschlüsselten Zeichens darf kein eingegebenes Klarzeichen mehr verschlüsselt werden, wobei der Sendepuffer ebenfalls leer sein muß.

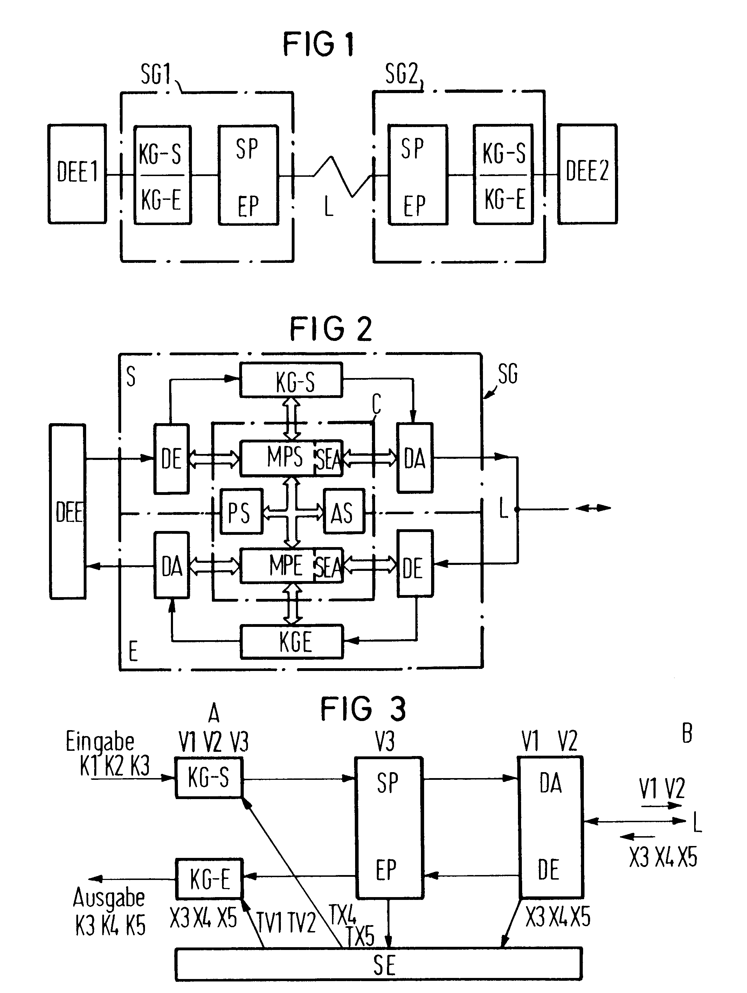

Bei einer in der Figur 3 dargestellten bekannten Anordnung ist zur Überwachung der Synchronisation der Schlüsselgeräte eine Sende-Empfangsüberwachungsanordnung SE in den Schlüsselgeräten vorgesehen. Diese funktionieren wie folgt. Ein Sendekryptogenerator KG-S einer Datenstation A verschlüsselt zunächst die eingegebenen Klarzeichen K1, K2 und K3 in verschlüsselte Zeichen V1, V2 und V3 und gibt sie in einen Senderpufferspeicher SP, von wo sie aus dann mit Hilfe einer Datenausgabeeinrichtung DA über eine Leitung L zu einer Station B gelangen. Ein Empfangs-Kryptogenerator KG-E wird erst weitergeschaltet und damit synchronisiert, wenn die Zeichen über die Datenausgabeeinrichtung DA gesendet werden. Das bedeutet, im Sendepufferspeicher SP der Station A können noch nicht gesendete verschlüsselte Zeichen liegen. Wird nun ein verschlüsseltes Zeichen (X3,X4,X5) von der Station B gesendet und einer Dateneingabeeinrichtung DE der empfangenden Station A empfangen, so muß es im Empfangs-Kryptogenerator KG-E entschlüsselt werden, was zu den Klarzeichen K3, K4 und K5 führt. Die Sende-Empfangsüberwachungsanordnung SE ermittelt die Differenz der verschlüsselten Zeichen und der gesendeten Zeichen, also die Anzahl der verschlüsselten Zeichen, die sich noch im Sendepuffer SP befinden. Empfangene und zur Entschlüsselung laufende Zeichen werden von der Anzahl der Zeichen im Sendepuffer SP abgezogen. Ist das Ergebnis "O", so muß nun jedes weitere zur Entschlüsselung laufende Zeichen den Sendegenertor weiterschalten. Die im Sendepuffer SP liegenden verschlüsselten Zeichen dürfen nicht mehr gesendet werden. Die Überwachungsanordnung SE muß nun die Klarzeichen von der im Sendepuffer nicht gesendeten verschlüsselten Zeichen nochmals verschlüsseln. In der dargestellten Zeichnungen stellen dabei die Zeichen TX4 und TX5 sowie die Zeichen TV1 und TV2 die Zeichentakte für die Kryptobaugruppe der Station A dar. Mit V sind dabei verschlüsselte Zeichen von der Station A zur Station B gekennzeichnet, mit X verschlüsselte Zeichen von der Station B zur Station A.

Bei den beschriebenen Maßnahmen zur Synchronisierung der Kryptogeneratoren beim Halbduplexbetrieb erfolgt die Überwachung auf Schlüsselhasenverlust während des Betriebes. Dazu ist ein hoher Aufwand notwendig. Wird die Schreibdiziplin nicht eingehalten, so führt es zu einem sofortigen Schlüsselphasenverlust mit einem zeitaufwendigen anschließenden Einphasen. Ein Grund für die Empfindlichkeit von derartigen Anordnungen gegenüber Schlüsselphasenverlust hat seine Ursachen in der notwendigen Pufferung der Zeichen im Schlüsselgerät.

Aufgabe der Erfindung ist es, für gesicherte Datennetze im Halbduplexbetrieb Verfahren und eine Anordnung bereitzustellen, die es ermöglicht, in einfacher Weise die Kryptogeneratoren der Schlüsselgeräte zu synchronisieren und unempfindlich gegen Schlüsselphasenverlust zu machen. Ein weiteres Ziel der Erfindung besteht darin, die Schlüsseleinphasung bei der Eröffnung des Datenverkehrs zu erleichtern und zu vereinfachen.

Diese Aufgabe wird gemäß den Merkmalen der Patentansprüche 1 und 2 gelöst.

Gemäß der Erfindung phast bei der Eröffnung des Datenverkehrs der Sende-Kryptogenerator der sendenden Station den Empfangs-Kryptogenerator der empfangenden Station mit einem Spruchschlüssel ein. Beide Generatoren bilden dann mit Hilfe eines vereinbarten Algorithmus unter Verwendung des Spruchschlüssels einen Einphasalgorithmus und phasen die jeweiligen Partnerkryptogeneratoren der Stationen ein.

Dadurch werden die Strecken von der Station A zur Station B und von der Station B zur Station A unabhängig voneinander eingephast und damit wie zwei Simplexstrecken behandelt. Ein Schlüsselphasenverlust kann nicht auftreten, auch wenn die Schreibdiziplin nicht eingehalten wird. Zwar führt ein Gegensprechen wie vereinbart zu einer sofortigen Unterbrechung des Datenverkehrs, nicht jedoch zum Schlüsselphasenverlust selbst. Der verschlüsselte Datenverkehr kann deswegen ohne Zeitverlust wieder aufgenommen werden. Die Prozedurforderungen für den Halbduplexbetrieb, nämlich wechselseitiges verschlüsseltes Schreiben mit nur einer Einphasung bei Beginn des Betriebes können deshalb ohne großen Aufwand und sicher erfüllt werden.

Eine Ausführungsform der Erfindung ist in den Figuren 1 und2 beschrieben, die Figur 3 dient zur Erläuterung des Standes der Technik.

Im einzelnen zeigen

Figur 1 ein schematisches Blockschaltbild eines gesicherten Datennetzes im Halbduplexbetrieb,

Figur 2 ein schematisches Blockschaltbild eines Schlüsselgerätes mit darin integrierter Schlüsseleinphasanordnung und

Figur 3 ein schematisches Blockschaltbild eines bekannten Schlüsselgerätes in einem Fernschreibnetz.

Ein in den Figuren 1 und 2 dargestelltes gesichertes Fernschreibnetz enthält eine Vielzahl von Datenstationen DEE1, DEE2 mit Fernschreibgeräten, wobei in der Zeichnung der Einfachheit halber nur zwei Datenstationen dargestellt sind, welche für einen Zeitraum oder standleitungsmäßig miteinander verbunden sind. Jeder Datenstation DEE1 und DEE2 ist ein Schlüsselgerät SG1, SG2 zugeordnet mit einem Sendekryptogenerator KG-S in einem Sendekanal S und einem Empfangskryptogenerator KG-E in einem Empfangskanal E. Die Schlüsselgeräte SG1 und SG2 sind untereinander identisch aufgebaut. Der Nachrichtenaustausch wird in der Verkehrsart "Halbduplex" durchgeführt, d.h. die zwischen den Datenstationen DEE1 und DEE2 befindliche Übertragungsstrecke in Form z.B. einer Leitung L wird wechselweise genutzt. Übertragen werden über die Leitungen in üblicher Weise Fernschreibzeichen im Fünfer- oder Achtercode mit einem vorausgehenden Startschritt und einem nachfolgenden Stopschritt und mit fünf bzw. acht Informationsbits.

Sowohl in dem Sende-Kryptogenerator KG-S als auch dem Empfangs-Kryptogenerator KG-E sind eingangs- und ausgangsseitig Dateneingangs- und Datenausgangsschaltungen DE, DA zugeordnet. Die handelsüblichen Empfangs- und Sendebausteine z.B. UA (Universal Asynchronous Receiver Transmitter) mit zugehörigen, hier nicht dargestellten Schieberegistern aufweisen. Die Schieberegister dienen als Zwischenspeicher, um die von den UA mitgelieferten Informationensbits (5 oder 8) der Fernschreibzeichen zwischenzuspeichern und sie den Kryptogeneratoren zum Verschlüsseln bzw. Entschlüsseln zuzuführen. In der Datenausgangsschaltung DA werden die verschlüsselten bzw. entschlüsselten Informationsbits in Speichern mit einem Empfangsspeicherteil EP und einem Sendespeicherteil SP zwischengespeichert und zur Übernahme durch die Datenendeinrichtung bzw. zur Übertragung über die Leitung L bereitgestellt. Gesteuert wird der Datenfluß im Schlüsselgerät SG sowohl im Sende- als auch im Empfangskanal (S,E) über eine Steueranordnung C, die als Recheneinrichtung Mikroprozessoren enthält. Die Anzahl von Mikroprozessoren hängt dabei von der geforderten Leistungsfähigkeit der Steuerschaltung ab. Im dargestellten Ausführungsbeispiel ist ein Mikroprozessor MPS im Sendekanal und ein Mikroprozessor MPE im Empfangskanal angeordnet. Weiterhin ein oder mehrere mit den Mikroprozessoren gekoppelte Programmspeicher PS und ein oder mehrere Arbeitsspeicher AS. Die Elemente der Steuerungsanordnung C sind untereinander über ein Bussystem miteinander verkoppelt. Außerdem stehen sie funktionell über entsprechende Busleitungen mit den Elementen des Schlüsselgerätes SG in Verbindung. Die im Blockschaltbild der Figur 2 dargestellten Funktionseinheiten sind dabei teilweise in Hardware, teilweise in Software realisiert. Dies gilt auch für eine funktionell dargestellte Schlüsseleinphasanordnung SEA zum Einphasen der Kryptogeneratoren KG-S, KG-E bei der Eröffnung des Datenverkehrs. Die Funktion dieser Schlüsselphasenanordnung wird durch die Mikroprozessoren übernommen.

Sie enthält im Prinzip Detektions- und Einphasmittel zum Erfassen eines bei der Eröffnung des Datenverkehrs zwischen einem Sendegenerator KG-S eines Schlüsselgerätes SG1 einer sendenden Datenstation und eines Empfangs-Kryptogenerators KG-E eines Schlüsselgerätes SG2 einer empfangenden Datenstation übertragenen Spruchschlüssels und zum Einphasen des Empfangskryptogenerators KG-E des Schlüsselgerätes SG2 mit dem Sendekryptogenerator KG-S des Schlüsselgerätes SG1 unter Verwendung des Spruchschlüssels. Diese Detektions- und Einphasmittel sind durch Funktionsbereiche der Mikroprozessoren MPS und MPE realisiert. Sie sind softwaremäßig ausgebildet, können jedoch auch übliche Vergleichseinrichtungen mit Phasenkreisen aufweisen.

Weiterhin enthält die Schlüsseleinphasanordnung Speichermittel zum Abspeichern eines Einphasalgorithmus. Diese Speichermittel sind Bereiche des Programmspeicheres PS, vorzugsweise jedoch des Arbeitsspeichers AS. Als Einphasalogrithmus kann dabei jeder Algorithmus dienen, der in der Lage ist, den Spruchschlüssel, kurz genannt MI, zu verarbeiten und daraus einen neuen Spruchschlüssel, kurz genannt MI quer, zu bilden. Als Einphasalgorithmus kann z.B. verwendet werden: Ein Algorithmus zur Bildung des Kompliments des Spruchschlüssels MI.

Eine abgesprochene mathematische Transformation des Spruchschlüssels MI oder eine rückwärts gelesene Benutzung des Spruchschlüssels MI.

Weiterhin enthält die Schlüsseleinphasanordnung einphasmittel zum selbständigen Einphasen der einem jeweiligen Schlüsselgerät zugeordneten Kryptogeneratoren unter Verwendung des über den Einphasalgorithmus verarbeiteten Spruchschlüssels. Diese Einphasmittel können ebenfalls Bereiche der Mikroprozessoren MPS, MPE sein. Es ist jedoch auch möglich, die Schlüsselphasenanordnung mit den zugehörigen Funktionseinheiten als gesonderte mikroprozessorgesteuerte Anordnungen auszubilden, die in Busverbindung mit den Mikroprozessoren MPS und MPE stehen.

Die Anordnung arbeitet nun wie folgt:

Bei Eröffnung des Datenverkehrs übermittelt der Sendegenerator KE-S des Schlüsselgerätes SG1 der sendenden Station an den Empfangsgenerator KG-E des Schlüsselgerätes der empfangenden Station einen Spruchschlüssel MI zur Einphasung des Sendegenerators mit dem Empfangsgenerator. Der Sendegenerator KG-S des Schlüsselgerätes SG1 der sendenden Station und der Empfangsgenerator KG-E der empfangenden Station phasen nunmehr den Partnergenerator desselben Schlüsselgerätes ein. Das bedeutet bei dem dargestellten Beispiel, daß der Kryptogenerator KG-S des Schlüsselgerätes SG1 den Empfangskryptogenerator KG-E desselben Schlüsselgerätes einphast und der Emfangskryptogenerator KG-E des Schlüsselgerätes SG2 den dort angeordneten Sendekryptogenerator KG-S. Zum Einphasen wird, wie bereits beschrieben, der ursprüngliche Spruchschlüssel MI mit Hilfe eines Einphasalgorithmus umgesetzt und damit die beschriebene Einphasung vollzogen. Der Einphasalgorithmus muß den verschiedenen Schlüsselgeräten bekannt sein, so daß die Verarbeitung des Spruchschlüssels MI in beiden Datenstationen in deren Schlüsselgeräte SG1 und SG2 gleichermaßen erfolgen kann.

Nachdem die Schlüsselgeräte SG1 und SG2 in Phase arbeiten, kann mit dem Datenverkehr begonnen werden.

Durch die vorbeschriebene Einphasprozedur werden die Strecken von der Station DE1 zur Station DE2 und von der Station DE2 zur Station DE1 unabhängig voneinander eingephast und wie zwei Simplexstrecken behandelt, obwohl es sich um eine einzige Leitung handelt. Damit erfolgt für die Zwecke der Einphasung eine quasi Simplex-Prozedur für die Leitung L.

Pufferungseinflüsse durch die Sender-Empfängerpuffer der Schlüsselgeräte werden damit ausgeschaltet und es kann kein Schlüsselphasenverlust auftreten, wenn z.B. die Schreibdiziplin nicht eingehalten wird.

**Patentansprüche**

1. Anordnung zum verschlüsselten Nachrichtenaustausch im Halbduplex-Betrieb zwischen mehreren Datenstationen (DEE1, DEE2) über eine Übertragungsstrecke (L), wobei jeder Datenstation (DEE1, DEE2) ein Schlüsselgerät (SG1,SG2) mit einem Sende-Kryptogenerator (KG-S) in einem Sendekanal (S) und einem Empfangs-Kryptogenerator (KG-E) in einem Eopfangskanal (E) zugeordnet ist und Sende- und Empfangskanal als gemeinsamer Übertragungskanal (L) über die Übertragungsstrecke geführt ist, mit

- einer den Kryptogeneratoren (KG-S, KG-E) der Schlüsselgeräte zugeordnete Schlüsseleinphasanordnung (SEA) zum Einphasen der Kryptogeneratoren (KG-S, KG-E) bei der Eröffnung des Datenverkehrs, wobei die Schlüsseleinphasanordnung (SEA) umfaßt

- Detektions- und Einphasmittel zum Erfassen eines bei der Eröffnung des Datenverkehrs zwischen einem Sendegenerator (KG-S) eines Schlüsselgerätes (SG1) einer sendenden Datenstation mit einem Empfangskryptogenerator (KG-E) eines Schlüsselgerätes (SG2) einer empfangenden Datenstation Datenstation übertragenen Spruchschlüssels und zum Einphasen des Empfangskryptogenerators (KG-E) mit dem Sendekryptogenerator (KG-S) unter Verwendung des Spruchschlüssels;

- Speichermittel (AS) zum Abspeichern eines Einphasalgorithmus und

- Einphasmittel zum selbständigen Einphasen der einem jeweiligen Schlüsselgerät (SG1, SG2) zugeordneten Kryptogeneratoren (KG-S, KG-E) untereinander unter Verwendung des über den Einphasalgorithmus verarbeitenden Spruchschlüssels.

2. Verfahren zur Schlüsseleinphasung in gesicherten Datennetzen mit Halbduplexbetrieb mit mehreren über eine Übertragungsstrecke (L) verbundenen Datenstationen (DEE1, DEE2), wobei jeder Datenstation ein Schlüsselgerät (SG1, SG2) mit Sende-Kryptogenerator (KG-S) in einem Sendekanal (S) und einem Empfangs-Kryptogenerator (KG-E) in einem Empfangskanal (E) zugeordnet ist und Sende- und Empfangskanal als gemeinsamer Übertragungskanal (L) über die Übertragungsstrecke geführt wird, mit folgenden Verfahrensschritten:

a) bei Eröffnung des Datenverkehrs übermittelt der Sendegenerator (KG-S) des Schlüsselgerätes (SG1) der sendenden Station an den Empfangskryptogenerator (KG-E) des Schlüsselgerätes (SG2) der empfangenden Station einen Spruchschlüssel zur Einphasung, und

b) der Sendegenerator (KG-S) des Schlüsselgerätes (SG1) der sendenden Station und der Empfangsgenerator (KG-E) des Schlüsselgerätes (SG2) der empfangenden Station phasen durch Verarbeitung des Spruchschlüssels über einen vorgegebenen, einheitlichen Einphasalgorithmus ihre jeweiligen, der gleichen Station zugeordneten Partnergeneratoren (KE-E in SG1, KE-S in SG2) ein.

# FIG 1

SG1

SG2

DEE1 | KG-S / KG-E | SP EP | L | SP EP | KG-S / KG-E | DEE2

# FIG 2

S

KG-S

SG

C

DE ↔ MPS SEA ↔ DA

DEE

PS ↔ AS

L

DA ↔ MPE SEA ↔ DE

KGE

E

# FIG 3

A

B

Eingabe K1 K2 K3

V1 V2 V3

KG-S

V3

SP

V1 V2

DA

V1 V2

L

EP

DE

X3 X4 X5

Ausgabe K3 K4 K5

KG-E

X3 X4 X5

TV1 TV2

TX4 TX5

X3 X4 X5

SE